# EUROPEAN PATENT SPECIFICATION

(11) **EP 2 463 790 B1**
(45) Date of publication and mention of the grant of the patent: **19.07.2017**
(21) Application number: 11192507.9
(22) Date of filing: 08.12.2011
(51) Int. Cl.: G06F 17/30

(54) **Manipulation of elements and their attributes in graphical user interfaces**
Manipulation von Elementen und deren Attributen in grafischen Benutzeroberflächen
Manipulation d'élément et de leurs attributs dans des interfaces d'utilisateur graphique

(30) Priority: 10.12.2010 US 964743
(43) Date of publication of application: 13.06.2012
(73) Proprietor: SAP SE, 69190 Walldorf (DE)
(72) Inventor: Arndt, Henrik, 69190 Walldorf (DE)
(74) Representative: Richardt Patentanwälte PartG mbB

(56) References cited:
- EP-A1- 2 251 802
- WO-A2-2007/079467
- US-A- 5 758 337
- BUNEMAN P ET AL: "A basis for interactive schema merging", SYSTEM SCIENCES, 1992. PROCEEDINGS OF THE TWENTY-FIFTH HAWAII INTERNAT IONAL CONFERENCE ON KAUAI, HI, USA 7-10 JAN. 1992, LOS ALAMITOS, CA, USA,, vol. ii, 7 January 1992 (1992-01-07), pages 311-322, XP010025895, IEEE COMPUT. SOC, US DOI: 10.1109/HICSS.1992.183244 ISBN: 978-0-8186-2420-9
- F.S: BRUNDICK ET AL.: "IChart: A Graphical Tool to View and Manipulate ForceManagement Structure Databases", Army Research Laboratory , September 2008 (2008-09), page 64PP, XP002670540, ABERDEEN PROVING GROUND, MD Retrieved from the Internet: URL:http://www.dtic.mil/cgi-bin/GetTRDoc?A D=ADA491913 [retrieved on 2012-02-29]
- MOTRO A ET AL: "AUTOMATICALLY MERGING DATABASES", DISTRIBUTED COMPUTING. WASHINGTON, 23-25 SEPTEMBER 1980. DIGEST OF PAPERS FROM COMPCON, FALL; [COMPUTER SOCIETY INTERNATIONAL CONFERENCE], NEW YORK, I.E.E.E, US, vol. CONF. 21, 1 September 1980 (1980-09-01), pages 279-286, XP000744629,

## Description

### FIELD

The field relates generally to graphical user interfaces. More particularly, the field is related to manipulation of elements and their attributes in graphical user interfaces of network structures.

### BACKGROUND

Network structures of complex systems are typically represented using graphical layouts on user interfaces. Examples of such complex systems include software systems, software programs with complex structures, and data in data sources. The graphical layouts mainly include nodes and connections to represent elements of the system and relation between the elements. The elements can include items and attributes of items. Icons are used for representing nodes and sub-nodes. The connection between the nodes can be represented using lines or arrows.

Such graphical layouts may be used for navigation. A user can move nodes (e.g. to the center of the graphical layout) and expand or collapse to navigate and reach a required element. If a user needs to manipulate or edit an element in a graphical layout, a separate view is opened where editing operations are performed. These editing operations can include changing name of an item, selecting and deselecting attributes of an item, establishing connections between items and attributes, and other manipulation of an element's representation in the graphical layout. An overview of connections between the elements is useful and important for performing editing operations. The user may therefore need to switch back and forth between the separately opened view and the graphical layout. This causes a break in the interaction flow and leads to usability issues, especially in the case of large network structures.

It would therefore be desirable to provide efficient and user friendly manipulation of elements of a network structure layout.

WO 2007/079467 A2 discloses a method and system for searching, filtering, creating, displaying, and managing entity relationships from a repository of data hierarchies through a user interface is provided.

BUNEMAN P. ET AL.: "A basis for interactive schema merging", proceedings of the 25th Hawaii International Conference on System Sciences, pages 311-322, Jan 1992, discloses a method for merging schemas of heterogeneous databases using an interactive schema merging tool.

F.S. BRUNDICK ET AL.: "IChart: A Graphical Tool to View and Manipulate Force Management Structure Databases", September 2009, pages 1-64, URL: http://www.dtic.mil/cgi-bin/GetTRDoc?AD=ADA491913 discloses a graphical tool to view, manipulate and/or modify the data in a database.

MOTRO A. ET AL.: "Automatically Merging Databases", digest of papers from COMPCON, computer society international conference, pages 279-286, Sep 1980, discloses a program that takes as input a set of assertions about two database schemas and generates a schema for their union using a semantic data model.

EP 2 251 802 A1 discloses a method for automatically creating a partial replica database from a source relational database, wherein a group of tables that are in direct foreign key relationship with a driving table to which a filtering step is to be applied is selected.

US 5 758 337 A discloses a system for creating database partial replicas where the referential integrity of the original database is maintained in the partial replica.

### SUMMARY

The present invention provides for a computer-implemented method of performing a database query, a corresponding computer program product and a computer system as claimed in the independent claims. Embodiments of the invention are given in the dependent claims.

Various embodiments of systems and methods for manipulation of elements and their attributes in graphical user interfaces are described herein. A graphical layout comprising nodes and connections as a representation of data in a data source is displayed on a user interface. Manipulation operations can be performed by a user on one or more nodes of the graphical layout to create a new data source. One or more nodes of the graphical layout are rendered to graphically represent manipulation operations. The manipulation operations comprise at least one of selection of one or more nodes, changing an attribute, and changing connections between the nodes.

These and other benefits and features of embodiments of the invention will be apparent upon consideration of the following detailed description of preferred embodiments thereof, presented in connection with the following drawings.

Embodiments of the invention are particularly advantageous as a user can specify the data sources depending on the user's typical informational needs. As a consequence user interaction time with the computer system for entry of a query is reduced as the number of characteristics of the user specified data source can be reduced to what the user really needs. A further advantage is that the latency time experienced by the user for the execution of the query is also reduced due to the reduction of the amount of data that is contained in the user-specified data source. Furthermore, embodiments of the present invention are particularly advantageous as the user can specify a data source in an intuitive and ergonomic way without requirement of expert knowledge in the field of computer programming or database design.

In accordance with further embodiments of the invention the user can select nodes from more than one data source in order to specify a custom data source that precisely meets the user's needs.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.
**FIG. 1** is a block diagram illustrating a method for manipulation of elements of a graphical layout, according to one embodiment.
**FIG. 2** is a block diagram of a user interface showing a graphical layout, according to one embodiment.
**FIG. 3** is a block diagram of a user interface showing a graphical layout with nodes rendered to indicate manipulation operations, according to one embodiment.
**FIG. 4** is a block diagram of a user interface showing a table view of the graphical layout of FIG. 3, according to one embodiment.
**FIG. 5** is a block diagram of a user interface showing an embodiment of manipulation operations on the graphical layout.
**FIG. 6** is a block diagram of a user interface showing a graphical layout with nodes rearranged to represent manipulation operations of FIG. 5, according to one embodiment.
**FIG. 7** is a block diagram of a user interface showing a table view of the graphical layout of FIG. 6, according to one embodiment.
**FIG. 8** is a block diagram of a user interface showing a graphical layout with nodes rendered to indicate manipulation operations, according to another embodiment.
**FIG. 9** is a block diagram of an exemplary computer system according to one embodiment.
FIG. 10 is a block diagram of a user interface showing a graphical layout, according to a further embodiment,
FIG. 11 is a block diagram of the user interface of FIG. 10 that is displayed upon a user's entry of a navigation command,
FIG. 12 is a block diagram of a further embodiment of a computer system of the invention.

### DETAILED DESCRIPTION

Embodiments of techniques for manipulation of elements and their attributes in graphical user interfaces are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

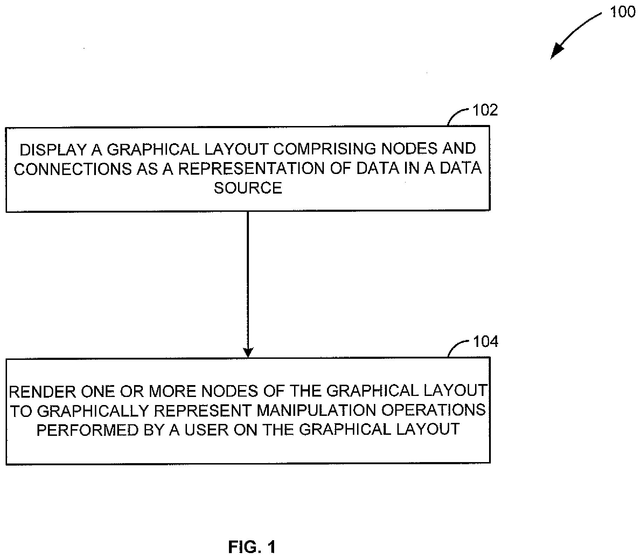

FIG. 1 illustrates an embodiment of a method for manipulation of elements of a graphical layout. In the context of this embodiment, the graphical layout is a graphical user interface that includes graphical elements in the form of nodes and connections between the nodes. The graphical layout can be a network structure that is used to represent a variety of systems including software systems using a plurality of nodes and connection. The graphical layout can include a hierarchical arrangement of nodes. Underlying data of a system or references to the data can be represented using the graphical layout. For example, a software system can include files and attributes of files. The files and attributes can be represented as nodes and the relationships between the files and the attributes can be represented using connections between the nodes. As another example, data in a data source (e.g. a database or a data warehouse) can include fields and attributes, which can also be represented as a graphical layout.

At 102, the graphical layout comprising nodes and connections as a representation of data in a data source is displayed on a user interface. A user may choose to display the graphical layout via a user interface of an application. In one embodiment, the application can be specific to enable manipulation operations on the graphical layout. In another embodiment, the application can have several other functionalities.

A user can perform manipulation operations on the graphical layout for various purposes. In one embodiment, a user may perform manipulation operations on the graphical layout for creating a new data source using a combination of elements in the data source. The user does not need to switch to any alternate view such as a list view or a table view to manipulate the elements of the graphical layout. The manipulation operations may vary depending on the underlying data that is represented by the graphical layout. The manipulation operations include node name editing operations, node selection operations, attribute change operations, and changing connections between the nodes.

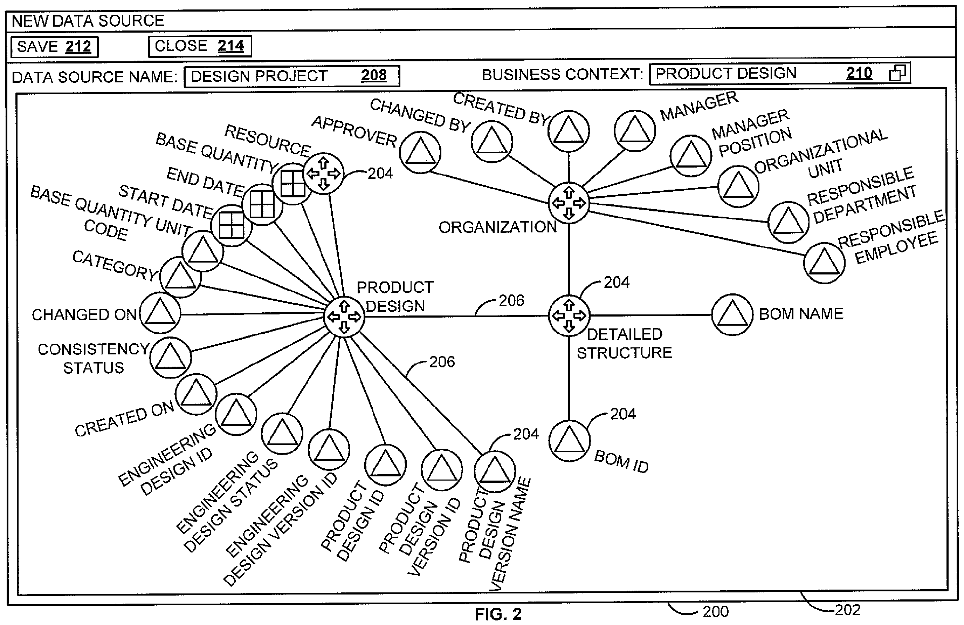

At 104, the nodes in the graphical layout are instantly rendered to graphically represent the manipulation operations performed by a user on the graphical layout. A unique graphical characteristic is assigned to each manipulation operation. The graphical characteristic can be a symbol, a color, or a combination of both symbol and color. In response to certain manipulation operations, a set of nodes are rearranged. The manipulation operations and the corresponding rendering of nodes are explained in detail with reference to FIGS. 2-8.

FIG. 2 illustrates an embodiment of a user interface 200 showing a graphical layout 202. The graphical layout 202 is a two-dimensional (flat) representation of a data source that a user has selected through the graphical user interface. The data source has a hierarchal data structure that is described by a graph that is formed by a network of nodes and their connections. However, the method for manipulation of elements can also be applied to graphical layouts having three-dimensional representation of a network. The elements of the graphical layout 202 include nodes 204 and connections 206 between nodes 204. The graphical layout 202 represents data in a data source. In one embodiment, the data source is an info cube. In another embodiment, the data source is a multi-dimensional data source used for business analytics or business intelligence applications. The nodes 204 of the graphical layout 202 represent elements or fields in a data source. Some nodes represent a category of data source elements or fields. For example, 'organization' node is a category that includes the elements/fields such as "Approver," "Changed By," "Created By," "Manager," etc. The category nodes can be represented by a unique icon-symbol combination, for example, a circle encompassing arrows. The connections 206 represent the relationship between the various elements of the data source. An attribute of a node can be represented using a specific symbol within the node 204. Depending on the application that provides the graphical layout, the user interface 200 can include a data source name field 208, a context field 210, a save option 212, and a close option 212.

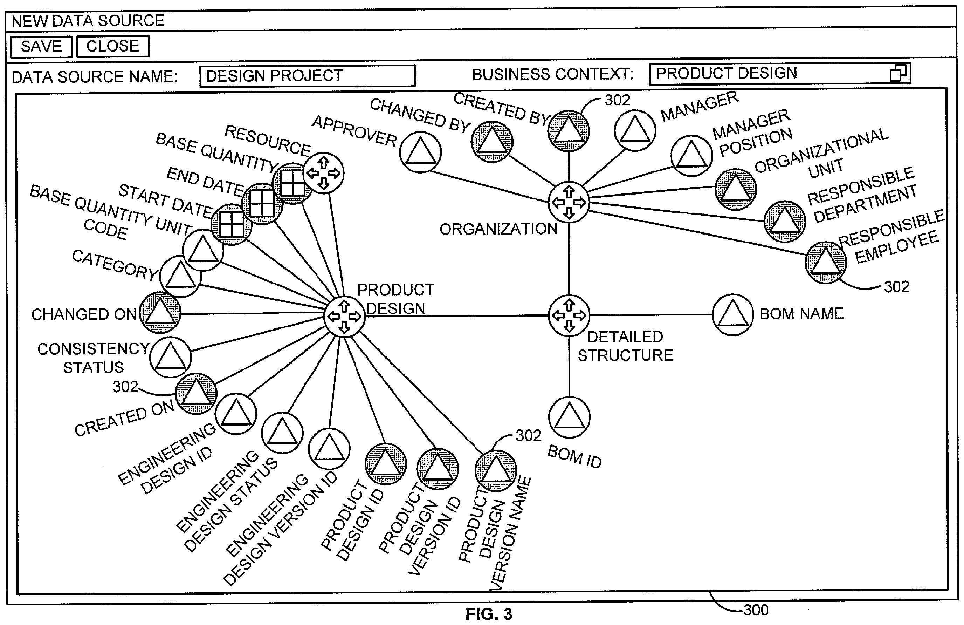

Referring to FIG. 3, the graphical layout 300 provides an overview of a data source. The manipulation operations can include selection of the nodes to make them part of a new data source. The user can select the nodes by a mouse click on the graphical layout. The selected nodes 302 are immediately rendered in the same view of the graphical layout 300 with a graphical characteristic to represent the selection operation. In one embodiment, the graphical characteristic is represented by a color coding of the selected nodes. The selected nodes are rendered with a different color compared to the non-selected nodes. The color coding is represented as gray shading in the figure, but it can be any color. A user can then save and close the graphical layout 300. The selected nodes 302 form part of the new data source that can be in turn used as the base data source on which a business analytics report can be build.

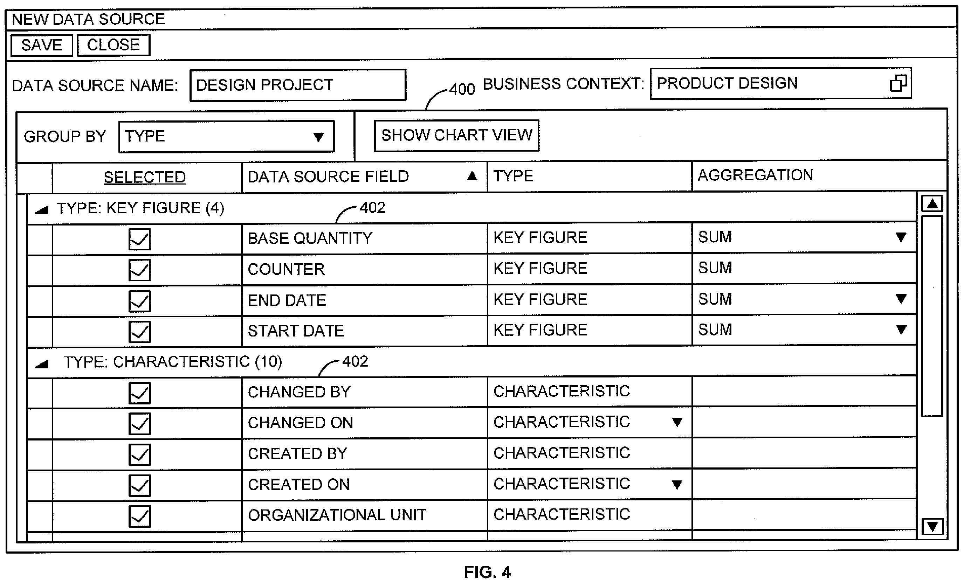

Referring to FIG. 4, the new data source selected on the graphical layout can also have a corresponding table view 400. The table view 400 provides a list 402 of selected nodes for the new data source. It can be noted that the selection operations are performed within the graphical layout (300 in FIG. 3) are reflected in the table view 400. A user does not need to switch between the graphical layout and a separate view (i.e. the table view 400) to perform the selection operations.

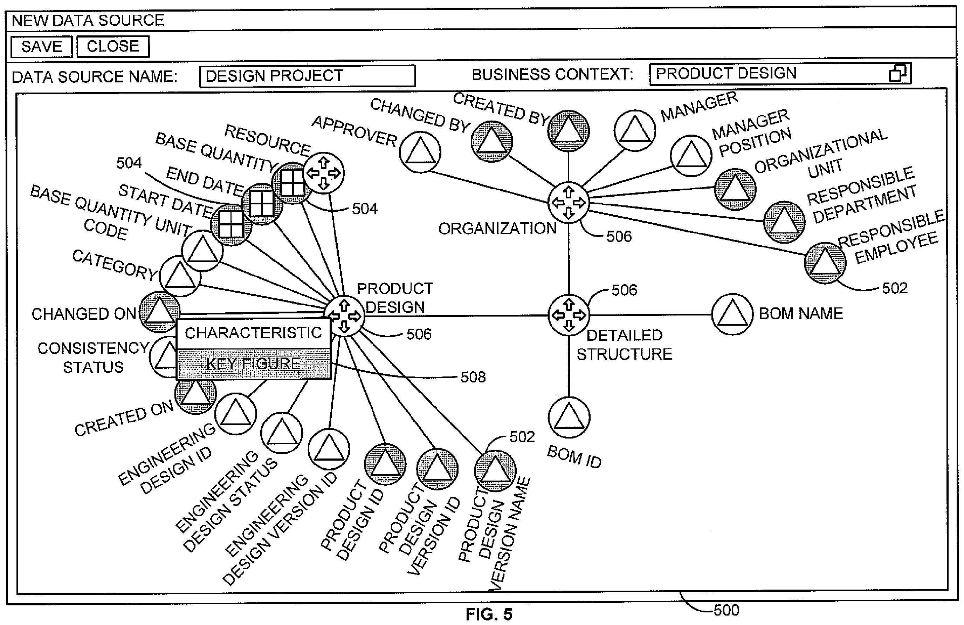

FIG. 5 illustrates an embodiment of manipulation operations performed on the graphical layout 500. The graphical layout 500 represents elements of a data source. In one embodiment, the data source is an object containing key figures and characteristics, which provides a multidimensional, analytical view of business data. Data sources are associated with a specified access context or can be unrestricted. Key figures and characteristics are fields according to which values are selected. Characteristics can be alphanumeric, numeric, or text values. Examples of characteristics include Product ID, Supplier, and Purchase Order Status. Variables can be associated with specified characteristics. Variables restrict characteristics to one or more specified value selections. Key figures are numeric values that have a unit of measure or currency assigned. Examples include Invoice Net Value and Purchase Order Quantity. A report, which is a compilation of data for analysis, shows values derived from key figures and characteristics in data sources.

Attributes of some of the nodes can include a key figure and a characteristic. For example, the lowest level of nodes can either have a "key figure" attribute or a "characteristic" attribute. The nodes with key figure attribute 502 can be represented differently compared to nodes with characteristics attribute 504. In one embodiment, a symbol inside the node can be used to differentiate between the nodes with key figure attribute 502 and the nodes with characteristics attribute 504. The nodes with key figure attribute 502 can be represented as a circle enclosing a grid symbol and nodes with characteristics attribute 504 can be represented as a circle enclosing a triangle.

A group of nodes with key figure attributes and characteristic attributes can belong to a category. This category also can be represented as a category node or a parent node. There can be several levels of category and each category can have other categories and nodes. The user can move a category node into the center of the graphical layout via a mouse click on it. Thus all sub-nodes of the category node that might have been outside the visible area of the network graph get visible and accessible. The category nodes 506 can be represented by a different icon-symbol combination, for example, a circle encompassing arrows. Also, the nodes with key figure attributes 502 and all the nodes with characteristic attributes 504 that emanate from a parent node, e.g. product design node 506, can be grouped. The nodes depending from a parent node and belonging to an attribute can be shown in a particular order. For example, nodes can be arranged in an alphabetical order by considering the node names (Base quantity node, End date node, and Start date node are arranged sequentially considering the starting alphabet of the node name).

The manipulation operations include changing the attribute of nodes, which can be performed by a user after the node selection operations or independent of the node selection operations. In one embodiment, a user can change the attributes by selecting a node, e.g. via a right click. A list 508 of available attributes can then be displayed by displaying a respective marker as shown in Fig. 5. By means of a single click the user can transform the attribute of the selected node. Alternatively this can be done in the tabular view of Fig. 4. An attribute can be selected as follows: For example, a user can right click on the "changed on" node that has a characteristic attribute. A key-figure attribute and a characteristic attribute can then be displayed in the same view of the graphical layout. The user can select the key figure attribute.

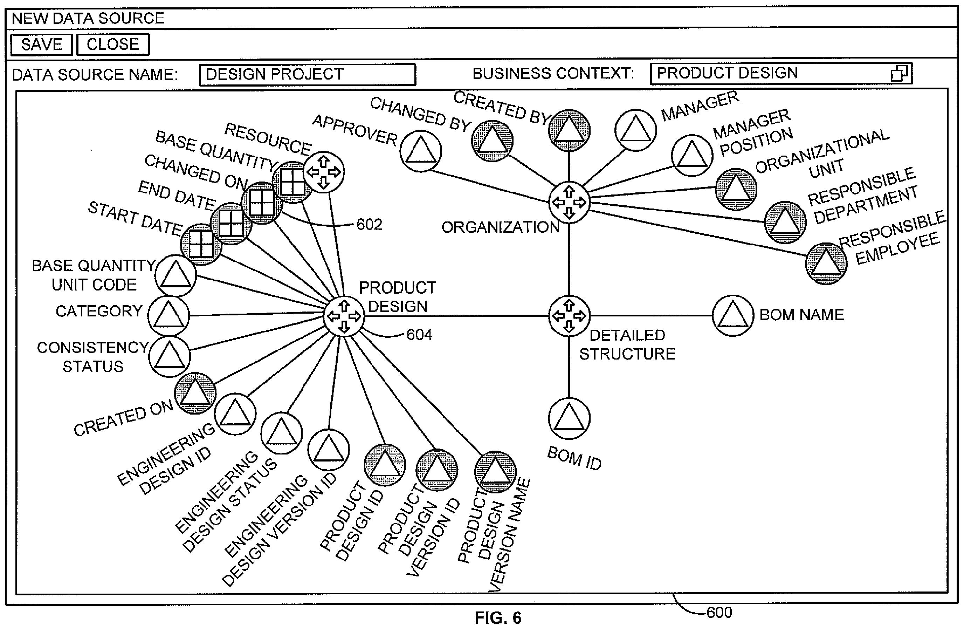

Referring to FIG. 6, after changing an attribute, the nodes are rendered in the same view of the graphical layout 600 to represent the change in attribute. For example, the "changed on" node 602 is represented as a circle enclosing a grid symbol indicating that it is now a key figure attribute. The nodes can also be rearranged to reflect the change in the attributes. Since the attribute of the "changed on" node 602 is changed to key figure, the nodes are rearranged so that the "changed on" node 602 is moved to the group of nodes with key figure attributes.

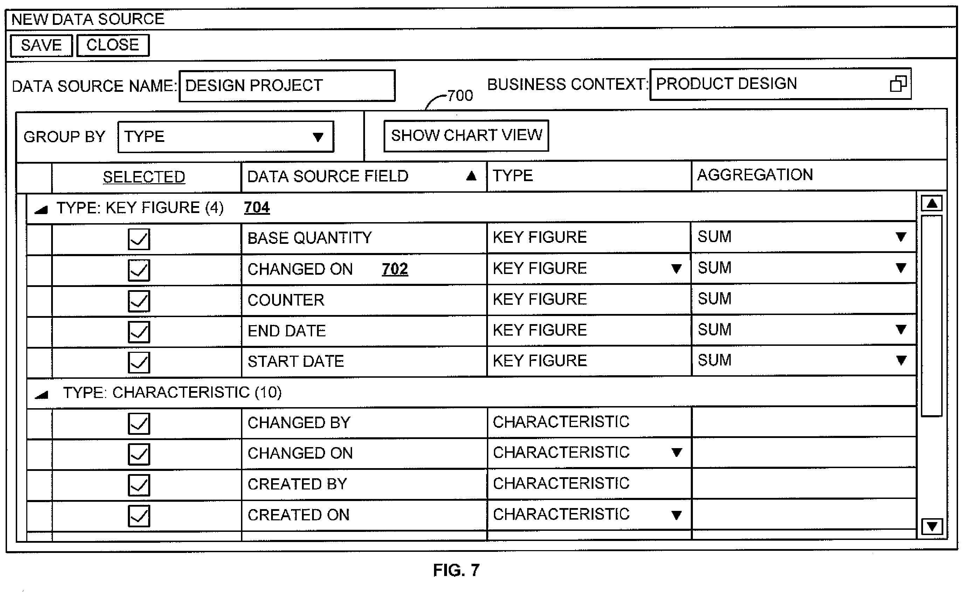

FIG. 7 illustrates an embodiment of a table view 700 of the corresponding graphical layout (600 in FIG. 6) after changing attributes. The "changed on" node 702 which was in characteristic group (as shown in FIG. 4) is now present in the key figure group 704 following the attribute change operation performed on the corresponding graphical layout.

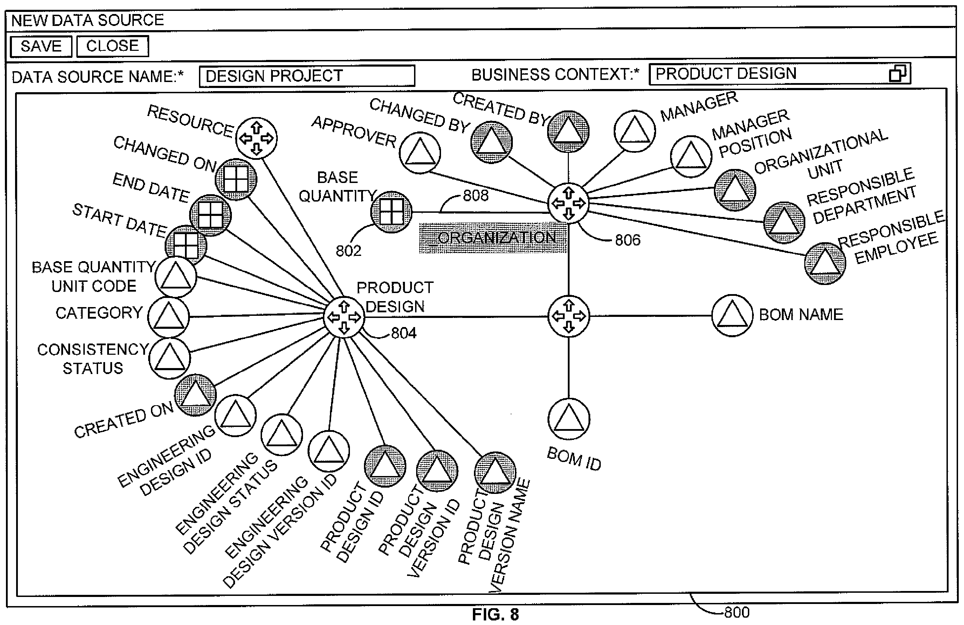

FIG. 8 illustrates a graphical layout 800 with nodes rendered to indicate another manipulation operation, i.e. changing connections between nodes. A user can drag and drop one node over another node to change connections between the nodes. In one embodiment, a new connection is established between the newly connected nodes. For example, the base quantity node 802 that was connected to the product design node 804 (as shown in FIG. 6) is dragged and dropped over the organization node 806. The base quantity node 802 is rendered to represent its connection with the organization node 806. A line 808 between the base quantity node 802 and the organization node 806 is instantly rendered to represent the connection. The old connection between the base quantity node 802 and the product design node 804 can be deleted. In another embodiment, depending on the type of attribute, node, or the underlying data, the old connections can be retained.

In another embodiment, name of a node can also be edited on the graphical layout. Names of all nodes may not be required to be edited. There may be some nodes eligible for name editing depending on the application. A user can select a name of a node (e.g. double click) for editing. In FIG. 8, for example, the name 'organization' is selected by a user for editing. A user need not switch to a corresponding list view or table view to edit the name.

One of the advantages of the method for manipulation of elements of a graphical layout is that a user does not need to change a view or open a separate view to perform manipulation operations. The manipulation operations are instantly represented graphically on the graphical layout with unique graphical characteristics. This enables a user to identify the manipulated nodes. A user's cognitive effort is minimized as there is no need to switch between multiple views. Also, the graphical layout represents an overview of an entire structure, which facilitates a user to perform relevant and appropriate manipulation operations.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

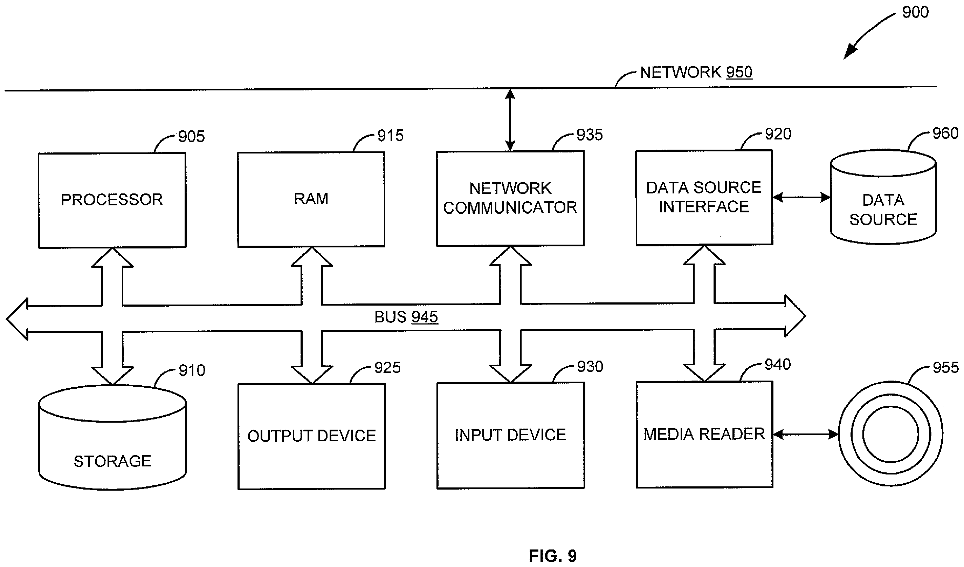

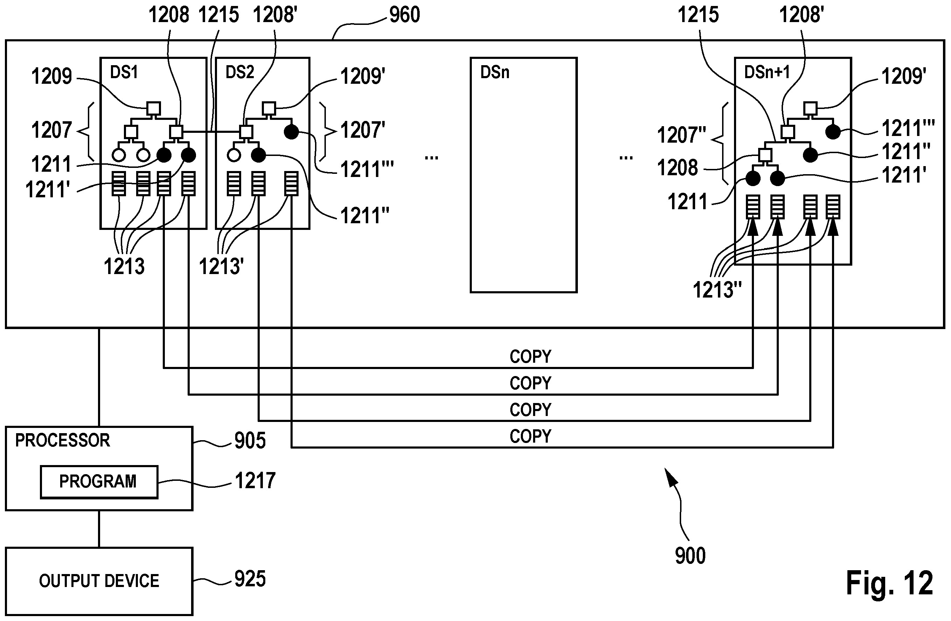

FIG. 9 is a block diagram of an exemplary computer system 900. The computer system 900 includes a processor 905 that executes software instructions or code stored on a computer readable storage medium 955 to perform the above-illustrated methods of the invention, such as a program module1217 (cf. Fig. 12). The computer system 900 includes a media reader 940 to read the instructions from the computer readable storage medium 955 and store the instructions in storage 910 or in random access memory (RAM) 915. The storage 910 provides a large space for keeping static data where at least some instructions could be stored for later execution. The stored instructions may be further compiled to generate other representations of the instructions and dynamically stored in the RAM 915. The processor 905 reads instructions from the RAM 915 and performs actions as instructed. According to one embodiment of the invention, the computer system 900 further includes an output device 925 (e.g., a display) to provide at least some of the results of the execution as output including, but not limited to, visual information to users and an input device 930 to provide a user or another device with means for entering data and/or otherwise interact with the computer system 900. Each of these output devices 925 and input devices 930 could be joined by one or more additional peripherals to further expand the capabilities of the computer system 900. A network communicator 935 may be provided to connect the computer system 900 to a network 950 and in turn to other devices connected to the network 950 including other clients, servers, data stores, and interfaces, for instance. The modules of the computer system 900 are interconnected via a bus 945. Computer system 900 includes a data source interface 920 to access data source DS that is stored in mass storage DS. The data source DS can be accessed via one or more abstraction layers implemented in hardware or software. For example, the data source DS may be accessed by network 950. In some embodiments the data source DS may be accessed via an abstraction layer, such as, a semantic layer.

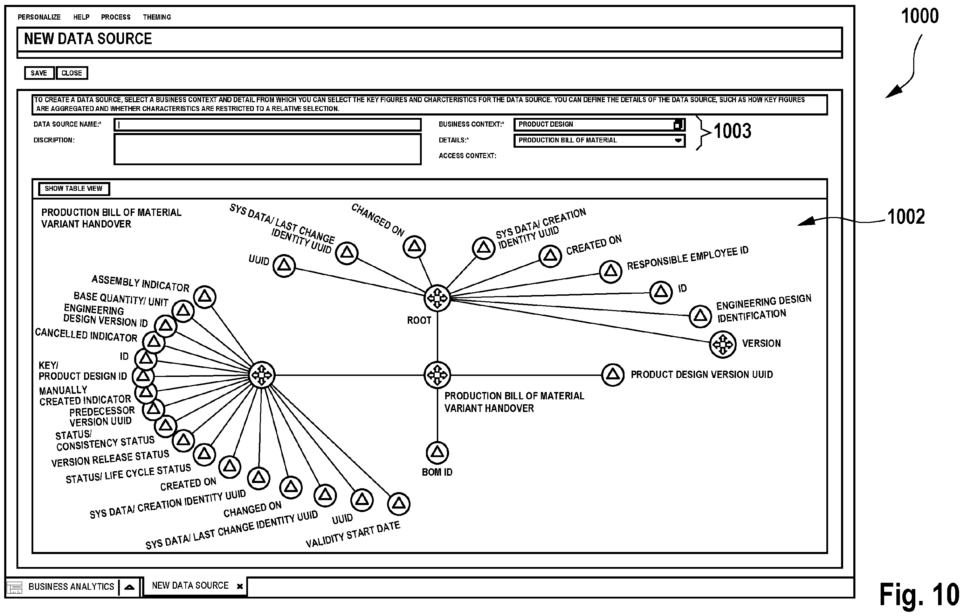

FIG. 10 illustrates an embodiment of the user interface 1000 showing a graphical layout 1002. In the embodiment considered here the graphical layout 1002 shows a representation of a directed graph that is constituted by a network of nodes that are connected by edges as shown in FIG. 10. The user has selected the data source 'production bill of material' from the business context 'product design' using the selection fields 1003 of the graphical user interface. For example, the graphical layout that comprises the graphical representation 1002 comprises the node 'root', 'version', 'production bill of material' and 'version' wherein each one of these nodes is representative of a data category. The node 'version' has a number of leaf nodes that are representative of characteristics, such as 'assembly indicator', 'base quantity/unit', 'engineering design version ID', etc. Likewise the other category nodes have leaf nodes being representative of characteristics; in addition, the root node 'root' is connected to the 'version' node. The leaf nodes that are connected to this 'version' node are hidden in the graphical layout 1002.

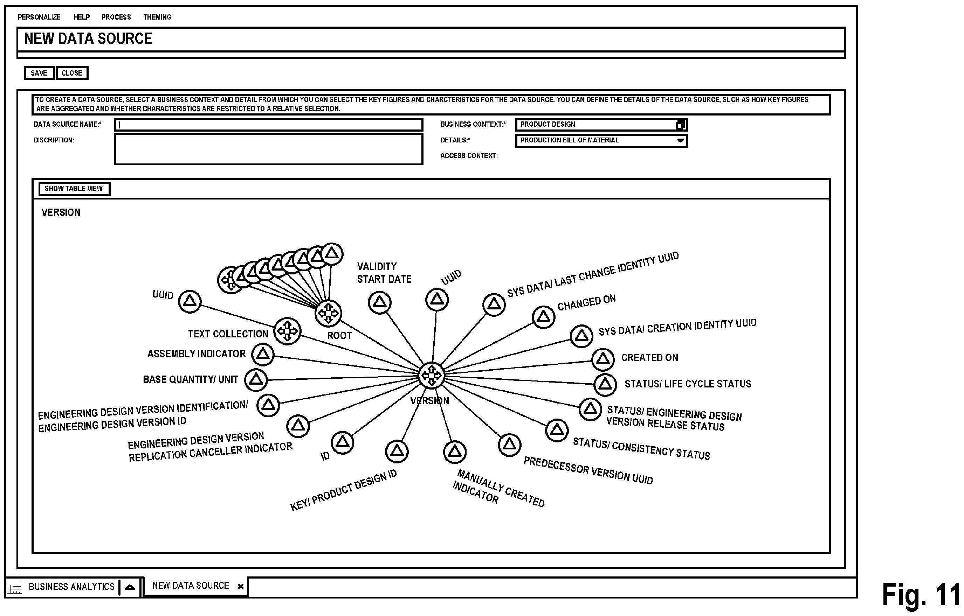

The user has selected various of the leaf nodes by clicking on the respective nodes, i.e. nodes 'base quantity unit', 'ID', 'created on', 'changed on', 'responsible employee ID', 'ID' and 'engineering design identification'. For selection of leaf nodes that are connected to the node 'version' the user can click on the node 'version' as the graphical user interface implements radial tree navigation. In response to clicking on the node 'version' the graphical layout 1002 changes to what is shown in FIG. 11 where the leaf nodes that depends on the node 'version' are shown for the user's selection.

FIG. 12 shows a block diagram of an embodiment of the computer system 900. In the embodiment considered here the mass storage 960 stores a number of N data sources DS1, DS2, ..., DSn, ... DSN. Each one of the data sources DSn has a hierarchical data structure that is represented by a graph. This is schematically illustrated in FIG. 12 with respect to DS1 and DS2:
DS1 has a data structure that is represented by a graph 1207. The graph 1207 has a root node 1209 from which various nodes are dependent, including leaf nodes 1211 and 1211'. Each one of the leaf nodes is representative of one of the database tables 1213 that is filled with actual data values of the respective characteristic that is represented by the leaf nodes of the graph 1207.

In the example considered here the user has selected the leaf nodes 1211 and 1211' from DS1 as indicated by the black filling in that nodes.

The data source DS2 has a hierarchical data structure that is represented by a graph 1207' that includes a root node 1209' and leaf nodes 1211" and 1211'" that have been selected by the user. The DS2 comprises tables 1213' that hold data values for the characteristics of their respective leaf nodes.

In the example considered here the user has selected both DS1 and DS2 such that the graphical layout for both graphs 1207 and 1207' is displayed on the user interface at the same time. The user has performed manipulation operations for selection of the nodes 1211, 1211', 1211" and 1211"'. In addition the user has connected the node 1208 to the node 1208' that depend from the root node 1209' by a connection 1215 as shown in FIG. 12. This way the user has specified the data structure and the elements of an additional data source DSN+1. In response to clicking on the 'save' button of the graphical user interface (cf. the save button shown in FIGS. 2-8, 10, 11), execution of a program 1217 is invoked such that the additional data source DSN+1 is generated:

First the hierarchical data structure of DSN+1 is determined by the program module 1217 from the manipulation operations that have been entered by the user, i.e. the selection of the nodes 1211, 1211', 1211", 1211"' and the additional connection 1215. This defines the hierarchical structure 1207" as illustrated in FIG. 12.

An empty data structure is created that comprises a table 1213" for each one of the nodes 1211, 1211', 1211" and 1211"' by the program module 1217. In the next step the data values contained in tables 1213 that are represented by nodes 1211 and 1211' as well as the data values of tables 1213' that are represented by the nodes 1211" and 1211'" are copied into the respective tables 1213" of DSN+1. As a consequence the new additional data source DSn+1 has been created and added to the set of data sources that are stored in mass storage 960.

In the following the user can select the data source DSN+1 from the mass storage 960 for performing a query. For example, the user can enter the query by entering a value range for one or both of the characteristics that are represented by the nodes 1211,1211', 1211" and 1211"'. This query is executed using DSN+1 which avoids a need for a complex query involving two separate data sources DS1 and DS2. This is particularly advantageous as the latency time experienced by the user for the performance of the query and the return of the query results is substantially shortened. The user can take advantage of this for subsequent queries of the same type reusing DSN+1. A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention.

Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

## Claims

1. A computer implemented method of performing a database query comprising
- generating an additional database (DSN+1) by performing the steps of
a. selecting at least first and second databases from a set of databases (DS1, D2,..., DSn,...,DSN), each database of the set of databases having a hierarchical data structure being represented by a directed graph (1207, 1207'), the directed graph comprising nodes and connections between nodes as a representation of data stored in the respective database, each node being representative of one of a data category, a characteristic or a key figure, the characteristic is an alphanumeric, numeric, or text value, the key figures are numeric values having a unit of measure or currency assigned, each connection connecting a first and a second node, wherein the first node is a predecessor of the second node on a higher level of hierarchy in the hierarchical structure, each directed graph (1207, 1207') having a root node (1209) from which various nodes are dependent, including leaf nodes (1211, 1211'), each one of the leaf nodes being representative of a database table (1213) that is filled with actual data values of a characteristic that is represented by the leaf nodes of the graph (1207), wherein the selection of the at least one database is performed by a user via a graphical user interface,
b. displaying on the graphical user interface a graphical layout (202; 1002) for rendering the directed graphs, the graphical layout comprising a graphical representation of the nodes and connections of the at least first and second selected databases,
c. rendering of manipulation operations performed by the user on one or more nodes of the graphical layout to specify the data structure and elements of the additional database, wherein the manipulation operations comprise at least selecting of at least one leaf node (1211) from the first database and at least one leaf node (1211") from the second database and adding a connection (1215) between nodes of the first and second databases and graphically representing the manipulation operations as they are entered by the user establishing one or more new connections to represent the change in connections between the nodes,
d. entering a save command via the graphical user interface by the user,
e. in response to the save command, generating an empty data structure being hierarchically structured as specified by the data structure of the additional database that is specified by the entry of the manipulation operations performed in step c), the empty data structure comprising a table for each one of the leaf nodes that have been selected by the user in step c), and selectively copying data values from the selected first and second databases in accordance with the user-selected nodes into the empty data structure, wherein only data values of data that is represented by nodes that have been selected by the user in step c) are copied into the empty data structure,
- adding the additional database that results from the selective copying of the data values into the empty data structure to the set of databases,
- selecting the additional database from the set of databases for querying the additional database,
- entering the database query for querying the selected additional database by entering search criteria for at least a subset of the characteristics represented by nodes of the additional database,
- executing the database query on the selected additional database.

2. The method of claim 1, a subset of the nodes being rendered in the graphical representation being representative of characteristics, the subset of these nodes being graphically labeled by a marker being indicative of the transformability of the characteristic represented by a given node of the subset of nodes into a key figure.

3. The method of claim 2, further comprising
selecting the marker of one of the nodes of the subset of nodes for specifying the transformation of the selected node from a characteristic to a key figure in the additional database, wherein the selection of the marker is performed in the graphical layout or in a tabular view of the directed graph by a single user input action.

4. The method of any one of the preceding claims, wherein the manipulation operation of step c) further comprises at least one of changing an attribute, changing a connection between first and second nodes of the selected at least one database, and changing connections between the first and the second nodes of the selected first and second databases.

5. The method of any one of the preceding claims, wherein the step c) comprises performing a radial tree navigation in the graphical representation prior to selection of one or more nodes by the user.

6. The method of anyone of the preceding claims, further comprising rendering the one or more nodes of the graphical layout to graphically represent the one or more manipulation operations with unique graphical characteristics represented by a color, a symbol, or a combination of the color and symbol.

7. The method of anyone of the preceding claims, further comprising rearranging the one or more nodes of the graphical layout.

8. The method of anyone of the preceding claims, wherein the attribute comprises a characteristic or a key figure.

9. The method of anyone of the preceding claims, wherein the manipulation operation for changing an attribute comprises choosing an attribute from a plurality of attributes.

10. The method of anyone of the preceding claims, wherein manipulation operation further comprises editing a name of a node.

11. The method of claim 9 or 10, wherein the attribute comprises a characteristic and a key figure and/or wherein the manipulation operation for changing an attribute comprises choosing an attribute from a plurality of attributes.

12. A computer program product, in particular a digital storage medium, storing executable instructions for execution by a processor for performing the steps of the method of any one of the preceding claims.

13. A computer system for performing a database query comprising:
mass storage means (960) for storing a set of databases,
a graphical user interface,
a computer memory to store program code (1217); and
a processor (905) to execute the program code for:
- generating an additional database (DSN+1) by performing the steps of
a. receiving a user's selection of at least first and second databases from a set of databases (DS1, D2,..., DSn,...,DSN), each database of the set of databases having a hierarchical data structure being represented by a directed graph (1207, 1207'), the directed graph comprising nodes and connections between nodes as a representation of data stored in the respective database, each node being representative of one of a data category, a characteristic or a key figure, the characteristic is an alphanumeric, numeric, or text value, the key figures are numeric values having a unit of measure or currency assigned, each connection connecting a first and a second node, wherein the first node is a predecessor of the second node on a higher level of hierarchy in the hierarchical structure, each directed graph (1207, 1207') having a root node (1209) from which various nodes are dependent, including leaf nodes (1211, 1211'), each one of the leaf nodes being representative of a database table (1213) that is filled with actual data values of a characteristic that is represented by the leaf nodes of the graph (1207), wherein the section of the at least one database is performed by a user via a graphical user interface,
b. displaying on the graphical user interface a graphical layout (202; 1002) for rendering the directed graphs, the graphical layout comprising a graphical representation of the nodes and connections of the at least first and second selected database,
c. rendering of manipulation operations performed by the user on one or more nodes of the graphical layout to specify the data structure and elements of the additional database, wherein the manipulation operations comprise at least selecting of at least one leaf node (1211) from the first database and at least one leaf node (1211") from the second database and adding a connection (1215) between nodes of the first and second databases and graphically representing the manipulation operations as they are entered by the user establishing one or more new connections to represent the change in connections between the nodes,
d. receiving a save command via the graphical user interface,
e. in response to the save command, generating an empty data structure being hierarchically structured as specified by the data structure of the additional database that is specified by the entry of the manipulation operations performed in step c), the empty data structure comprising a table for each one of the leaf nodes that have been selected by the user in step c), and selectively copying data values from the selected first and second databases in accordance with the user-selected nodes into the empty data structure, wherein only data values of data that is represented by nodes that have been selected by the user in step c) are copied into the empty data structure,
- adding the additional database that results from the selective copying of the data values into the empty data structure to the set of databases,
- receiving a user's selection of the additional database from the set of databases for querying the additional database,
- receiving the database query for querying the selected additional database by receiving search criteria for at least a subset of the characteristics represented by nodes of the additional database,
- executing the database query on the selected additional database.

## Patentansprüche

1. Computerimplementiertes Verfahren für die Durchführung einer Datenbankabfrage, umfassend:
- Erzeugen einer zusätzlichen Datenbank (DSN+1) durch Durchführen der folgenden Schritte:
a. Auswählen von zumindest einer ersten und einer zweiten Datenbank aus einem Satz von Datenbanken (D1, D2, ..., Dsn, ..., DSN), wobei jede Datenbank aus dem Satz von Datenbanken eine hierarchische Datenstruktur aufweist, die durch einen gerichteten Graphen (1207, 1207') dargestellt wird, wobei der gerichtete Graph Knoten und Verbindungen zwischen Knoten umfasst, die für Daten stehen, die in der jeweiligen Datenbank gespeichert sind, wobei jeder Knoten für eine Datenkategorie, ein Merkmal oder eine Schlüsselzahl steht, wobei das Merkmal ein alphanumerischer, numerischer oder Textwert ist, die Schlüsselzahlen numerische Werte mit einer zugeordneten Maßeinheit oder Währung sind, wobei jede Verbindung einen ersten und einen zweiten Knoten verbindet, wobei der erste Knoten ein Vorgänger des zweiten Knotens auf einer höheren Hierarchieebene in der hierarchischen Struktur ist, wobei jeder gerichtete Graph (1207, 1207') einen Wurzelknoten (1209) aufweist, von dem verschiedene Knoten, einschließlich von Blattknoten (1211, 1211'), abhängen, wobei jeder von den Blattknoten für eine Datenbanktabelle (1213) steht, die mit Istdatenwerten eines Merkmals gefüllt ist, das von den Blattknoten des Graphen (1207) dargestellt wird, wobei die Auswahl der mindestens einen Datenbank von einem Benutzer über eine grafische Benutzeroberfläche durchgeführt wird,
b. Anzeigen eines grafischen Layouts (202; 1002) zur Wiedergabe der gerichteten Graphen auf der grafischen Benutzeroberfläche, wobei das grafische Layout eine grafische Darstellung der Knoten und Verbindungen von zumindest der ersten und der zweiten Datenbank umfasst,
c.Wiedergeben von Bearbeitungsoperationen, die von dem Benutzer an einem oder mehreren Knoten des grafischen Layout durchgeführt werden, um die Datenstruktur und Elemente der zusätzlichen Datenbank zu spezifizieren, wobei die Bearbeitungsoperationen umfassen: Auswählen mindestens eines Blattknotens (1211) aus der ersten Datenbank und mindestens eines Blattknotens (1211") aus der zweiten Datenbank und Hinzufügen einer Verbindung (1215) zwischen Knoten der ersten und der zweiten Datenbank und grafisches Darstellen der Bearbeitungsoperationen, während sie von dem Benutzer eingegeben werden, der eine oder mehrere neue Verbindungen einrichtet, um die Änderung der Verbindungen zwischen den Knoten darzustellen,
d.Eingeben eines Speichern-Befehls über die grafische Benutzeroberfläche durch den Benutzer,
e. Beantworten des Speichern-Befehls durch Erzeugen einer leeren Datenstruktur, die hierarchisch strukturiert ist, gemäß der Spezifikation der Datenstruktur der zusätzlichen Datenbank, die durch die in Schritt c) durchgeführte Eingabe der Bearbeitungsoperationen spezifiziert worden ist, wobei die leere Datenstruktur eine Tabelle für jeden von den Blattknoten umfasst, die in Schritt c) vom Benutzer ausgewählt worden sind, und selektives Kopieren von Datenwerten aus der ausgewählten ersten und zweiten Datenbank gemäß den vom Benutzer ausgewählten Knoten in die leere Datenstruktur, wobei nur Datenwerte von Daten, die von Knoten dargestellt werden, die vom Benutzer in Schritt c) ausgewählt worden sind, in die leere Datenstruktur kopiert werden,
- Hinzufügen der zusätzlichen Datenbank, die aus dem selektiven Kopieren der Datenwerte in die leere Datenstruktur resultiert, zu dem Satz von Datenbanken,
- Auswählen der zusätzlichen Datenbank aus dem Satz von Datenbanken, um eine Suche in der zusätzlichen Datenbank durchzuführen,
- Eingeben der Datenbankabfrage zum Durchsuchen der ausgewählten zusätzlichen Datenbank durch Eingeben von Suchkriterien für zumindest einen Untersatz der Merkmale, die von Knoten der zusätzlichen Datenbank dargestellt werden,
- Ausführen der Datenbanksuche in der ausgewählten zusätzlichen Datenbank.

2. Verfahren nach Anspruch 1, wobei ein Untersatz der Knoten, die in der grafischen Darstellung wiedergegeben werden, für Merkmale steht, wobei der Untersatz aus diesen Knoten durch eine Markierung gekennzeichnet ist, welche die Transformierbarkeit des Merkmals, das von einem bestimmten Knoten des Knotenuntersatzes dargestellt wird, in eine Schlüsselzahl angibt.

3. Verfahren nach Anspruch 2, ferner umfassend:
Auswählen der Markierung von einem der Knoten des Knotenuntersatzes für die Spezifizierung der Transformation des ausgewählten Knotens von einem Merkmal in eine Schlüsselzahl in der zusätzlichen Datenbank, wobei die Auswahl der Markierung im grafischen Layout oder in einer Tabellenansicht des gerichteten Graphen durch eine einzige Eingabeaktion des Benutzers durchgeführt wird.

4. Verfahren nach einem der vorangehenden Ansprüche, wobei die Bearbeitungsoperation von Schritt c) ferner mindestens eines der folgenden umfasst: Ändern eines Attributs, Ändern einer Verbindung zwischen einem ersten und einem zweiten Knoten der mindestens einen ausgewählten Datenbank und Ändern von Verbindungen zwischen den ersten und zweiten Knoten der ausgewählten ersten und zweiten Datenbank.

5. Verfahren nach einem der vorangehenden Ansprüche, wobei der Schritt c) das Durchführen einer radiären Baumnavigation in der grafischen Darstellung vor der Auswahl eines oder mehrerer Knoten durch den Benutzer umfasst.

6. Verfahren nach einem der vorangehenden Ansprüche, ferner das Wiedergeben des einen oder der mehreren Knoten des grafischen Layouts umfassend, um die eine oder die mehreren Bearbeitungsoperationen grafisch darzustellen, wobei eindeutige grafische Merkmale durch eine Farbe, ein Symbol oder eine Kombination aus Farbe und Symbol dargestellt werden.

7. Verfahren nach einem der vorangehenden Ansprüche, ferner das Neuanordnen des einen oder der mehreren Knoten des grafischen Layouts umfassend.

8. Verfahren nach einem der vorangehenden Ansprüche, wobei das Attribut ein Merkmal oder eine Schlüsselzahl umfasst.

9. Verfahren nach einem der vorangehenden Ansprüche, wobei die Bearbeitungsoperation zur Änderung eines Attributs das Auswählen eines Attributs aus mehreren Attributen umfasst.

10. Verfahren nach einem der vorangehenden Ansprüche, wobei die Bearbeitungsoperation ferner das Editieren eines Namens eines Knotens umfasst.

11. Verfahren nach Anspruch 9 oder 10, wobei das Attribut ein Merkmal und eine Schlüsselzahl umfasst und/oder wobei die Bearbeitungsoperation zur Änderung eines Attributs das Auswählen eines Attributs aus mehreren Attributen umfasst.

12. Computerprogrammprodukt, insbesondere als digitales Speichermedium, das ausführbare Befehle zur Ausführung durch einen Prozessor speichert, um die Schritte des Verfahrens nach einem der vorangehenden Ansprüche durchzuführen.

13. Computersystem zur Durchführung einer Datenbankabfrage, umfassend:
eine Massenspeichereinrichtung (960) zum Speichern eines Satzes von Datenbanken,
eine grafische Benutzeroberfläche,
einen Computerspeicher zum Speichern von Programmcode (1217); und
einen Prozessor (905) zur Ausführung des Programmcodes, um
- eine zusätzliche Datenbank (DSN+1) zu erzeugen durch Durchführen der folgenden Schritte:
a. Empfangen einer von einem Benutzer getroffenen Auswahl in Form von zumindest einer ersten und einer zweiten Datenbank aus einem Satz von Datenbanken (DS1, D2, ..., Dsn, ..., DSN), wobei jede Datenbank aus dem Satz von Datenbanken eine hierarchische Datenstruktur aufweist, die durch einen gerichteten Graphen (1207, 1207') dargestellt wird, wobei der gerichtete Graph Knoten und Verbindungen zwischen Knoten umfasst, die für Daten stehen, die in der jeweiligen Datenbank gespeichert sind, wobei jeder Knoten für eine Datenkategorie, ein Merkmal oder eine Schlüsselzahl steht, wobei das Merkmal ein alphanumerischer, numerischer oder Textwert ist, die Schlüsselzahlen numerische Werte mit einer zugeordneten Maßeinheit oder Währung sind, wobei jede Verbindung einen ersten und einen zweiten Knoten verbindet, wobei der erste Knoten ein Vorgänger des zweiten Knoten auf einer höheren Hierarchieebene in der hierarchischen Struktur ist, wobei jeder gerichtete Graph (1207, 1207') einen Wurzelknoten (1209) aufweist, von dem verschiedene Knoten, einschließlich von Blattknoten (1211, 1211'), abhängen, wobei jeder von den Blattknoten für eine Datenbanktabelle (1213) steht, die mit Istdatenwerten eines Merkmals gefüllt ist, das von den Blattknoten des Graphen (1207) dargestellt wird, wobei die Auswahl der mindestens einen Datenbank von einem Benutzer über eine grafische Benutzeroberfläche durchgeführt wird,
b. Anzeigen eines grafischen Layouts (202; 1002) zur Wiedergabe der gerichteten Graphen auf der grafischen Benutzeroberfläche, wobei das grafische Layout eine grafische Darstellung der Knoten und Verbindungen von zumindest der ersten und der zweiten Datenbank umfasst,
c.Wiedergeben von Bearbeitungsoperationen, die von dem Benutzer an einem oder mehreren Knoten des grafischen Layout durchgeführt werden, um die Datenstruktur und Elemente der zusätzlichen Datenbank zu spezifizieren, wobei die Bearbeitungsoperationen umfassen: Auswählen mindestens eines Blattknotens (1211) aus der ersten Datenbank und mindestens eines Blattknotens (1211") aus der zweiten Datenbank und Hinzufügen einer Verbindung (1215) zwischen Knoten der ersten und der zweiten Datenbank und grafisches Darstellen der Bearbeitungsoperationen, während sie von dem Benutzer eingegeben werden, der eine oder mehrere neue Verbindungen einrichtet, um die Änderung der Verbindungen zwischen den Knoten darzustellen,
d. Empfangen eines Speichern-Befehls über die grafische Benutzeroberfläche,
e. Beantworten des Speichern-Befehls durch Erzeugen einer leeren Datenstruktur, die hierarchisch strukturiert ist, gemäß der Spezifikation der Datenstruktur der zusätzlichen Datenbank, die durch die in Schritt c) durchgeführte Eingabe der Bearbeitungsoperationen spezifiziert worden ist, wobei die leere Datenstruktur eine Tabelle für jeden von den Blattknoten umfasst, die in Schritt c) vom Benutzer ausgewählt worden sind, und selektives Kopieren von Datenwerten aus der ausgewählten ersten und zweiten Datenbank gemäß den vom Benutzer ausgewählten Knoten in die leere Datenstruktur, wobei nur Datenwerte von Daten, die von Knoten dargestellt werden, die vom Benutzer in Schritt c) ausgewählt worden sind, in die leere Datenstruktur kopiert werden,
- Hinzufügen der zusätzlichen Datenbank, die ein Ergebnis des selektiven Kopierens der Datenwerte in die leere Datenstruktur ist, zu dem Satz von Datenbanken,
- Empfangen der Auswahl der zusätzlichen Datenbank aus dem Satz von Datenbanken für die Suche in der zusätzlichen Datenbank durch einen Benutzer,
- Empfangen der Datenbankabfrage zum Durchsuchen der ausgewählten zusätzlichen Datenbank durch Empfangen von Suchkriterien für zumindest einen Untersatz der Merkmale, die von Knoten der zusätzlichen Datenbank dargestellt werden,
- Ausführen der Datenbanksuche in der ausgewählten zusätzlichen Datenbank.

## Revendications

1. Procédé mis en oeuvre par ordinateur pour réaliser une demande de base de données comprenant
- la génération d'une base de données additionnelle (DSN+1) en exécutant les étapes
a. de sélection d'au moins une première et une deuxième bases de données à partir d'un ensemble de bases de données (DS1, D2, ..., DSn, ..., DSN), chaque base de données de l'ensemble des bases de données ayant une structure hiérarchique des données étant représentée par un graphique orienté (1207, 1207'), le graphique orienté comprenant des noeuds et des connexions entre des noeuds en tant que représentation de données stockées dans la base de données respective, chaque noeud étant représentatif d'un paramètre parmi une catégorie de données, une caractéristique ou une figure clé, la caractéristique est une valeur alphanumérique ou de texte, les figures clés sont des valeurs numériques ayant assignées une unité de mesure ou une devise, chaque connexion reliant un premier et un deuxième noeud, où le premier noeud est un prédécesseur du deuxième noeud sur un niveau élevé de hiérarchie dans la structure hiérarchique, chaque graphique orienté (1207, 1207') ayant un noeud racine (1209) à partir duquel des noeuds variés sont dépendants, comportant des noeuds feuilles (1211, 1211'), chacun des noeuds feuilles étant représentatif d'un tableau de base de données (1213) qui est rempli avec des valeurs de données instantanées d'une caractéristique qui est représentée par les noeuds feuilles du graphique (1207), où la sélection de l'au moins une base de données est réalisée par un utilisateur par l'intermédiaire d'une interface utilisateur graphique,
b. d'affichage sur l'interface utilisateur graphique, d'une représentation graphique (202 ; 1002) pour la restitution des graphiques orientés, la représentation graphique comprenant une représentation graphique des noeuds et des connexions des au moins première et deuxième bases de données sélectionnées,
c. de restitution des opérations de manipulation réalisées par un utilisateur sur un ou plusieurs noeuds de la représentation graphique afin de préciser la structure de données et les éléments de la base de données additionnelle, où les opérations de manipulation comprennent au moins la sélection d'au moins un noeud feuille (1211) à partir de la première base de données et d'au moins un noeud feuille (1211') à partir de la deuxième base de données et l'addition d'une connexion (1215) entre des noeuds des première et deuxième bases de donnés et la représentation graphique des opérations de manipulation telles qu'elles sont entrées par l'utilisateur établissant une ou plusieurs connexions pour représenter le changement dans des connexions entre les noeuds,
d. d'entrée d'une commande de sauvegarde par l'intermédiaire de l'interface utilisateur graphique par l'utilisateur,
e. en réponse à la commande de sauvegarde, de génération d'une structure de données vide étant structurée de manière hiérarchique telle que précisée par la structure des données de la base de données additionnelle qui est précisée par l'entrée des opérations de manipulation effectuées dans l'étape c), la structure de données vide comprenant un tableau pour chacun des noeuds feuilles qui ont été sélectionnés par l'utilisateur dans l'étape c), et de copie sélective de valeurs de données à partir des première et deuxième bases de données sélectionnées en fonction des noeuds choisis par l'utilisateur dans la structure de données vide, où uniquement des valeurs de données de données qui sont représentées par des noeuds qui ont été sélectionnés par l'utilisateur dans l'étape c) sont copiées dans la structure de données vide,
- l'addition de la base de données additionnelle qui résulte de la copie sélective des valeurs de données dans la structure de données vide à l'ensemble des bases de données,
- la sélection de la base de données additionnelle à partir de l'ensemble des bases de données pour demander la base de données additionnelle,
- l'entrée de la demande de base de données pour demander la base de données additionnelle sélectionnée en entrant des critères de recherche pour au moins un sous-ensemble des caractéristiques représentées par des noeuds dans la base de données additionnelle,
- l'exécution de la demande de base de données sur la base de données additionnelle sélectionnée.

2. Procédé selon la revendication 1, un sous-ensemble des noeuds étant représenté dans la représentation graphique étant représentatif des caractéristiques, le sous-ensemble de ces noeuds étant étiqueté de manière graphique par un marqueur étant indicatif de la transformabilité de la caractéristique représentée par un noeud donné du sous-ensemble de noeuds dans une figure clé.

3. Procédé selon la revendication 2, comprenant en outre la sélection d'un marqueur de l'un des noeuds du sous-ensemble de noeuds pour préciser une transformation du noeud sélectionné à partir d'une caractéristique vers une figure clé dans une base de données additionnelle, où la sélection du marqueur est réalisée dans une représentation graphique ou dans une présentation sous forme de tableau du graphique orienté par une action d'entrée unique d'utilisateur.

4. Procédé selon l'une quelconque des revendications précédentes, dans lequel l'opération de manipulation de l'étape c) comprend en outre au moins une opération parmi un changement d'un attribut, un changement d'une connexion entre les premier et deuxième noeuds de l'au moins une base de données sélectionnée, et un changement de connexions entre les premier et deuxième noeuds des première et deuxième bases de données sélectionnées.

5. Procédé selon l'une quelconque des revendications précédentes, dans lequel l'étape c) comprend la réalisation d'une navigation arborescente radiale dans la représentation graphique avant la sélection d'un ou de plusieurs noeuds par l'utilisateur.

6. Procédé selon l'une quelconque des revendications précédentes, comprenant en outre la restitution d'un ou de plusieurs noeuds de la représentation graphique pour représenter graphiquement la ou les opérations de manipulation avec des caractéristiques graphiques uniques représentées par une couleur, un symbole, ou une combinaison de la couleur et du symbole.

7. Procédé selon l'une quelconque des revendications précédentes, comprenant en outre le réarrangement du ou des noeuds de la représentation graphique.

8. Procédé selon l'une quelconque des revendications précédentes, dans lequel l'attribut comprend une caractéristique ou une figure clé.

9. Procédé selon l'une quelconque des revendications précédentes, dans lequel l'opération de manipulation pour changer un attribut comprend le choix d'un attribut parmi une pluralité d'attributs.

10. Procédé selon l'une quelconque des revendications précédentes, dans lequel l'opération de manipulation comprend en outre l'édition d'un nom d'un code.

11. Procédé selon la revendication 9 ou 10, dans lequel l'attribut comprend une caractéristique et une figure clé, et/ou dans lequel l'opération de manipulation pour changer un attribut comprend le choix d'un attribut parmi une pluralité d'attributs.

12. Produit d'un programme informatique, en particulier, milieu de stockage numérique, stockant des instructions exécutables pour une exécution par un processeur afin d'effectuer les étapes du procédé selon l'une quelconque des revendications précédentes.

13. Système informatique pour effectuer une demande de base de données comprenant :
des moyens de stockage en masse (960) pour stocker un ensemble de bases de données,
une interface utilisateur graphique,
une mémoire d'ordinateur pour stocker un code de programme (1217) ; et
un processeur (905) pour exécuter le code de programme pour :
- générer une base de données (DSN+1) additionnelle en effectuant les étapes
a. de réception d'une sélection d'utilisateur d'au moins des première et deuxième bases de données à partir d'un ensemble de bases de données (DS1, D2, ..., DSn, ..., DSN), chaque base de données de l'ensemble des bases de données ayant une structure hiérarchique des données étant représentée par un graphique orienté (1207, 1207'), le graphique orienté comprenant des noeuds et des connexions entre des noeuds en tant que représentation de données stockées dans la base de données respective, chaque noeud étant représentatif d'un paramètre parmi une catégorie de données, une caractéristique ou une figure clé, la caractéristique est une valeur alphanumérique ou de texte, les figures clés sont des valeurs numériques ayant assignées une unité de mesure ou une devise, chaque connexion reliant un premier et un deuxième noeud, où le premier noeud est un prédécesseur du deuxième noeud sur un niveau élevé de hiérarchie dans la structure hiérarchique, chaque graphique orienté (1207, 1207') ayant un noeud racine (1209) à partir duquel des noeuds variés sont dépendants, comportant des noeuds feuilles (1211, 1211'), chacun des noeuds feuilles étant représentatif d'un tableau de base de données (1213) qui est rempli avec des valeurs de données instantanées d'une caractéristique qui est représentée par les noeuds feuilles du graphique (1207), où la sélection de l'au moins une base de données est réalisée par un utilisateur par l'intermédiaire d'une interface utilisateur graphique,
b. d'affichage sur l'interface utilisateur graphique, d'une représentation graphique (202 ; 1002) pour la restitution des graphiques orientés, la représentation graphique comprenant une représentation graphique des noeuds et des connexions des au moins une première et une deuxième bases de données sélectionnées,
c. de restitution des opérations de manipulation réalisées par l'utilisateur sur un ou plusieurs noeuds de la représentation graphique afin de préciser la structure de données et les éléments de la base de données additionnelle, où les opérations de manipulation comprennent au moins la sélection d'au moins un noeud feuille (1211) à partir de la première base de données et d'au moins un noeud feuille (1211') à partir de la deuxième base de données et l'addition d'une connexion (1215) entre des noeuds des première et deuxième bases de donnés, et de représentation graphique des opérations de manipulation telles qu'elles sont entrées par l'utilisateur établissant une ou plusieurs connexions pour représenter le changement dans des connexions entre les noeuds,
d. de réception d'une commande de sauvegarde par l'intermédiaire de l'interface utilisateur graphique,
e. en réponse à la commande de sauvegarde, de génération d'une structure de données vide étant structurée de manière hiérarchique telle que précisée par la structure des données de la base de données additionnelle qui est précisée par l'entrée des opérations de manipulation effectuées dans l'étape c), la structure de données vide comprenant un tableau pour chacun des noeuds feuilles qui ont été sélectionnés par l'utilisateur dans l'étape c), et de copie sélective de valeurs de données à partir des première et deuxième bases de données sélectionnées en fonction des noeuds choisis par l'utilisateur dans la structure de données vide, où uniquement des valeurs de données de données qui sont représentées par des noeuds qui ont été sélectionnés par l'utilisateur dans l'étape c) sont copiées dans la structure de données vide,
- l'addition de la base de données additionnelle qui résulte de la copie sélective des valeurs de données dans la structure de données vide à l'ensemble des bases de données,
- la réception d'une sélection de l'utilisateur de la base de données additionnelle à partir de l'ensemble des bases de données pour demander la base de données additionnelle,
- la réception de la demande de base de données pour demander la base de données additionnelle sélectionnée en recevant des critères de recherche pour au moins un sous-ensemble des caractéristiques représentées par des noeuds dans la base de données additionnelle,
- l'exécution de la demande de base de données dans la base de données additionnelle sélectionnée.
